# EUROPEAN PATENT SPECIFICATION

(11) **EP 1 312 266 B1**
(45) Date of publication and mention of the grant of the patent: **24.01.2007**
(21) Application number: 02079495.4
(22) Date of filing: 29.10.2002
(51) Int. Cl.: A23G 3/00, A23G 3/02, C13K 1/00

(54) **Process for producing a sugar-containing, aerated product**
Verfahren zur Herstellung eines Zucker-enthaltenden und gelüfteten Produktes
Procédé pour la production d'une composition aérée sucrée

(30) Priority: 16.11.2001 EP 01204399
(43) Date of publication of application: 21.05.2003
(73) Proprietor: Zertus Marken GmbH, 20148 Hamburg (DE)
(72) Inventor: Jonas, Volker, c/o Bestfoods Deutschland GmbH, 74074 Heilbronn (DE); Schlund, Hubert, c/o Bestfoods Deutschland GmbH, 74074 Heilbronn (DE)
(74) Representative: Bergmann, Joachim

(56) References cited:
- EP-A- 0 815 739
- WO-A-00/53024
- FR-A- 2 787 811
- GB-A- 1 236 895
- US-A- 2 327 351
- US-A- 3 976 803
- US-A- 4 251 561
- US-A1- 2001 018 092
- US-H- H1 322

## Description

The present invention relates to a process for preparing a sugar-containing aerated product and the product so-obtained.

### Background of the invention

Edible carbohydrate products like confectionery are consumed for various reasons, one being the intake of calories. In particular monosaccharides are consumed quickly to provide energy to the human or animal metabolism upon consumption. To this end, in particular monosaccharides like fructose and dextrose are preferred, as they are quickly taken up into the bloodstream.

One such product is known under the trademark Dextro, which is almost pure dextrose monohydrate. This product is sold in a tablet form (of various sizes and shapes), having a bulk density of about 1.3 g/ml. Although such products are perfectly satisfactory for providing energy to the body quickly when consumed, and are easy in use, there is a demand for an alternative appearance.

Aerated products comprising dextrose are disclosed in CA 1146402 and DE 2407509. Such products are prepared by dissolving dextrose (or 'melting' when dextrose monohydrate is used), mix with a whipping agent (e.g. gelatin), whipping, cooling. WO 00/53024 discloses manufacturing aerated confectionary products (e.g. marshmallows) comprising next to saccharides 0.5-30% of a whipping or structuring agent.

Although such processes lead to aerated dextrose products, the texture is such that it needs a whipping agent to be stable. Use of such whipping agents may be undesirable for various reasons. In EP 0 815 739 this is achieved by in situ generation of carbon dioxyde and optionally further stabilization using an hydrocolloid. Hence, there is a need for an alternative process for preparing an aerated, solid dextrose-comprising product.

### Summary of the invention

It has been found that the above may suitably be prepared by a process for preparing a composition comprising at least 70% wt monosaccharides and optionally other sugars and which composition has (after preparation) a bulk density of less than 1.2 g/ml (preferably 0.1-1.0 g/ml), which process involves the steps of:
a) dissolving the monosaccharides and other sugars in an aqueous medium, and optionally evaporate water, such that a solution is obtained of 70-85°Brix (preferably 75-80°Brix),
b) optionally mix in a water-binding composition, flavours or colours, other components,
c) maintain the mix at a temperature below 80°C and add between 0.05 and 20% by weight of crystalline monosaccharide,
d) aerate product in a mixer at temperature lower than 80°C,
e) shape product and dry to final moisture content of 0.1-20% by weight,
characterised in that no whipping agent is added.

In step (a) a mixture comprising monosaccharides are used. Although mixtures may be used of monosaccharides with other sugars, it is preferably comprising at least 70% of dextrose, otherwise the resulting product may become too soft. For such dextrose in step (a) crystalline dextrose may be used, but more preferred are dextrose monohydrate or a glucose syrup (which comprises dissolved dextrose).

In step (c), the temperature is preferably 60-80°C, more preferably at 70-80°C. A higher temperature will mean that no or almost no crystallisation occurs. A lower temperature may mean that very large crystals may be formed, giving rise to a coarse, grainy product. The monosaccharide used in step (c) is preferably dextrose. The amount dextrose added in step (c) is preferably 0.1-5% wt, more preferably 0.3-2% by weight.

The product obtained by the process of the invention can be described as having an average reduced bulk density of between 0.1 and 1.0 g/ml, and more preferably the average bulk density is between 0.2 and 0.6 g/ml, and most preferred 0.2-0.4 g/ml. This can be compared to the known dextrose tablets of e.g. the trademark Dextro, which have a bulk density of 1.3 g/ml. This is due to the presence of air (or other gas) in the product, which may be up to 50% in volume, or more.

The shaping in step e) can be done using any conventional apparatus in confectionery, e.g. by extrusion or moulding.

### Detailed description of the invention

Although foamed products of other carbohydrate-rich compositions have been made before, they required the use of a whipping agent, which is omitted in the process according to the invention.

Without wishing to be bound by theory, it is believed that in the process according to the invention, the monosaccharide (preferably dextrose) added in step (c) functions as seed-crystals to start a crystallisation process. This, in combination with the aeration surprisingly yields a foamed product that is stable without the need to add a whipping agent or similar, and which has a unique firm-brittle, dry structure, which is thought to be the result of crystallisation.

The aeration in step (d) should be carried out below 80°C, preferably at 30-70°C. Higher temperatures may inhibit crystallisation and/or may lead to caramelisation.

The process according to the invention can be used to prepare compositions comprising dextrose in admixture with other monosaccharides, such as fructose, or in admixture with disaccharides. However, it is preferred that the composition according to the invention comprises 70-99.5% by weight of dextrose. As dextrose monohydrate is less hygroscopic this is a preferred form of dextrose.

In the process according to the invention a water-binding material may be added, e.g. 0.1-10% by weight. Such water-binding material may further stabilise the product, and may be preferred depending upon the end product that is desired. Possible water-binding materials in this context are: hydrocolloids (such as gelatine and agar), milk protein, starch. A whipping agent may be included, but is not necessary using the process according to the invention for achieving a porous yet rigid, firm solid foamed monosaccharide

### EXAMPLE

A solution was prepared of 76.5% by weight dextrose monohydrate and 23% water, by mixing the ingredients in a kettle and heating. Part of the water was then evaporated at boiling temperature (about 114-116°C) to yield a composition of about 78°Brix. The composition was then cooled to below 100°C.

The mixture was further cooled to between 75-80°C, and 0.5% of crystalline dextrose was added and mixed. The so-obtained mixture was aerated in a Mondomix system. The mixture was at this point about 80-81°Brix. After aeration the temperature was about 40°C. The resulting product was shaped and dried (overnight), and had a density of about 0.28 g/ml, and was stable for more than a month and was a firm, dry product that could be broken by hand, but did not crumble easily.

## Claims

1. Process for preparing a composition comprising at least 70% wt monosaccharides and optionally other sugars and which composition has a bulk density of less than 1.2 g/ml, which process involves the steps of:
a) dissolving the monosaccharides and other sugars in an aqueous medium, and optionally evaporating water, such that a solution is obtained of 70-85° Brix,
b) optionally mix in a water-binding composition, flavours or colours, other components,
c) maintain the mix at a temperature below 80°C and add between 0.05 and 20% by weight of crystalline monosaccharide,
d) aerate product in a mixer at temperature lower than 80°C,
e) shape product and dry to final moisture content of 0.1-20% by weight,
**characterised in that** no whipping agent is added.

2. Process according to claim 1, wherein the monosaccharide comprises at least 70% wt of dextrose.

3. Process according to claim 2, wherein the dextrose is dextrose monohydrate.

4. Process according to claim 2-3, wherein the amount dextrose added in step (c) is 0.1-5% wt, more preferred 0.3-2% by weight.

5. Process according to claim 1-4, wherein aeration is at temperatures of 30-70°C.

## Patentansprüche

1. Verfahren zum Herstellen einer Zusammensetzung, welche mindestens 70 Gew.-% Monosaccharide und gegebenenfalls weitere Zucker umfasst und welche Zusammensetzung eine Schüttdichte von weniger als 1,2 g/ml hat, welches Verfahren die Schritte einbezieht:
a) Lösen der Monosaccharide und weiteren Zucker in einem wässerigen Medium und gegebenenfalls Abdampfen von Wasser, so dass eine Lösung mit 70-85° Brix erhalten wird,
b) gegebenenfalls Einmischen einer Wasser-bindenden Zusammensetzung, Geschmacksmittel oder Farbstoffe, weitere Bestandteile,
c) Halten des Gemisches bei einer Temperatur unter 80°C und Zugeben von zwischen 0,05 und 20 Gew.-% kristallinem Monosaccharid,
d) Belüften des Produkts in einem Mixer bei einer Temperatur unter 80°C,
e) Formen von Produkt und Trocknen zu einem Endfeuchtigkeitsgehalt von 0,1-20 Gew.-%,
**dadurch gekennzeichnet, dass** kein Aufschlagmittel zugegeben wird.

2. Verfahren gemäß Anspruch 1, wobei das Monosaccharid mindestens 70 Gew.-% Dextrose umfasst.

3. Verfahren gemäß Anspruch 2, wobei die Dextrose Dextrose-Monohydrat ist.

4. Verfahren gemäß Anspruch 2-3, wobei die Menge an Dextrose, welche in Schritt (c) zugegeben wird, 0,1-5 Gew.-% beträgt, bevorzugter 0,3-2 Gew.-%.

5. Verfahren gemäß Anspruch 1-4, wobei Belüftung bei Temperaturen von 30-70°C stattfindet.

## Revendications

1. Procédé de préparation d'une composition comprenant au moins 70 % en poids de monosaccharides et facultativement d'autres sucres et laquelle composition a une masse volumique apparente inférieure à 1,2 g/mL, lequel procédé implique les étapes consistant à :
a) dissoudre les monosaccharides et autres sucres dans un milieu aqueux, et facultativement évaporer l'eau, de telle sorte qu'une solution de Brix 70 à 85° est obtenue,
b) facultativement mélanger dans une composition liant l'eau, des arômes ou des couleurs, d'autres composants,
c) maintenir le mélange à une température inférieure à 80 °C et ajouter entre 0,05 et 20 % en poids de monosaccharide cristallin,
d) aérer le produit dans un mélangeur à une température inférieure à 80°C,
e) façonner le produit et sécher à une teneur en humidité finale de 0,1 à 20 % en poids,
**caractérisé en ce qu'**aucun agent moussant n'est ajouté.

2. Procédé selon la revendication 1, dans lequel le monosaccharide comprend au moins 70 % en poids de dextrose.

3. Procédé selon la revendication 2, dans lequel le dextrose est du monohydrate de dextrose.

4. Procédé selon la revendication 2 ou 3, dans lequel la quantité de dextrose ajoutée dans l'étape (c) est de 0, 1 à 5 % en poids, de manière davantage préférée de 0,3 à 2 % en poids.

5. Procédé selon l'une quelconque des revendications 1 à 4, dans lequel l'aération se fait à des températures de 30 à 70°C.
